# EUROPEAN PATENT APPLICATION

(11) **EP 3 326 867 A1**
(43) Date of publication of application: **30.05.2018**
(21) Application number: 16203757.6
(22) Date of filing: 13.12.2016
(51) Int. Cl.: B60R 19/34, F16F 7/12

(54) **INTELLIGENT ENERGY ABSORBER**

(30) Priority: 25.11.2016 PL 41960616
(71) Applicant: Przemyslowy Instytut Motoryzacji, 03-301 Warszawa (PL)
(72) Inventor: Muszynski, Andrzej, 05-850 Szeligi (PL)
(74) Representative: Sielewiesiuk, Jakub

(57) **Abstract**

The intelligent energy absorber with adjustable energy dissipation characteristics, suitable for being used in vehicles e.g. as a bumper component intended to reduce the maximum values of the decelerations that act on a motor vehicle occupant during a frontal collision, consists of energy absorbers (2), each having been made in the form of V-shaped wire with its both free ends having been helically coiled on cylindrical spindles (4) fixed to a base frame (1) and with the apex (3) formed at the wire bend point constituting a hooking loop placed in a catch (6) of a guiding rail (5) and subject to the action of a ram (8) operated by an actuator (7), e.g. a solenoid actuator. The actuators make it possible for selected energy absorber hooking loops to be engaged with, and to be disengaged from, their catches of the guiding rail. A load applied to the hooking loop of the energy absorber causes the wire of which the absorber is made to be unwound and straightened.

## Description

The invention is related to an intelligent energy absorber with adjustable energy dissipation characteristics, suitable for being used in vehicles e.g. as a bumper component and for other machinery and equipment applications. The main objective of the intelligent energy absorber is to reduce the maximum values of the decelerations that act on a motor vehicle occupant during a road accident.

A solution known from patent description No. PAT.219735 is a device for taking over the impact energy, where the translational kinetic energy is converted into the rotational kinetic energy. Such a device consists of a ram element connected through shock-absorbing elements with racks engaged with toothed wheels driving rotary kinetic energy accumulators.

A solution known from Japanese patent application No. JP2012087849 is an energy-absorbing element consisting of a sleeve supported on a truncated cone. The application of a force of adequate value (generated e.g. during an impact) to the sleeve causes permanent deformation of the sleeve material and, in consequence, partial dissipation of the energy.

A solution known from Korean patent application No. KR20150076565 A is an impact energy-absorbing device used in vehicles and consisting of bumper beam connected by articulated joints through upper and lower links with the vehicle body. Each of the links consists of two arms connected with each other by a pin. Between the pins of the upper and lower link, there is an energy-dissipating element. In the case of an impact, the bumper beam is displaced and the links are bent outwards, stretching the energy-dissipating element.

The known solutions include intelligent safety systems such as the Autonomous Emergency Braking (AEB) system, which is chiefly used to slow down the vehicle and, as far as possible, to lessen the severity of effects of an unavoidable collision. The AEB can be actuated by the driver or without driver's intervention. The principle of operation of such a system is based on data obtained from a radar sensor and a video camera, which provide a complete picture of the conditions prevailing on the road. Having detected a possibility of an imminent collision, the system sends a signal to the braking system in order to generate a braking force. When driver's reaction is insufficient or there is no driver's reaction at all, the system generates the maximum pressure in the braking system to stop the vehicle.

A device known from Polish patent application No. P.407316 is a spring-based energy absorber, which comprises an energy-absorbing element in the form of a helical spring, coiled on a cylindrical spindle. One of the ends of the spring-shaped element is free and the other one and the bar are fastened to the system components that can move in relation to each other. When the said movement takes place, the wire of which the spring-shaped element is made is unwound and straightened in plastic deformation conditions, in result of which kinetic energy is absorbed and dissipated.

The intelligent energy absorber according to the invention, used for reducing the maximum values of the decelerations that act on motor vehicle occupant's body during a frontal collision, is characterized in that it consists of at least one energy absorber, which is made in the form of V-shaped wire with its both free ends having been helically coiled on cylindrical spindles (round bars or bobbins) fixed to a base frame and with the apex formed at the wire bend point constituting a hooking loop placed in a catch of a guiding rail and subject to the action of a ram operated by an actuator, e.g. a solenoid actuator. In addition to this, the actuators play the role of a mechanism that makes it possible for selected energy absorber hooking loops to be engaged with, and to be disengaged (released) from, their catches of the guiding rail. The catches are made as notches in the top surface of the guiding rail. The kinetic energy is absorbed and dissipated by "straightening", in plastic deformation conditions, of the energy absorber wires made of a material having appropriate mechanical properties, with appropriately selected geometrical parameters (wire diameter, winding diameter, number of turns). The free ends of each absorber wire remain free, thanks to which the absorber wire may freely rotate on the cylindrical spindle (round bar or bobbin), and a part of the absorber wire is bent to form a hooking loop.

The intelligent energy absorber will find application wherever controlled dissipation of kinetic energy is needed, especially as a component of intelligent safety systems for heavy vehicles, i.e. motor trucks and delivery motor vehicles, to ensure compatibility between different vehicles in road traffic collisions. The ensuring of vehicle compatibility in road traffic collisions is one of the most difficult and challenging road safety problems, still remaining unsolved. During road collisions, heavy-mass motor trucks dominate over much lighter passenger cars. In such a situation, the decelerations acting on car occupants are several times, or sometimes even several ten times, as high as those acting on the motor truck occupants. For the sake of better safety of occupants of the lighter vehicle involved in a collision between vehicles having significantly differing masses, the stiffness of the structure of the lighter vehicle should be increased with the stiffness of the heavy vehicle being considerably reduced at the same time. However, such a solution would be inacceptable, because it would pose a great hazard for the occupants of vehicles of both types in case of a collision with a rigid obstacle, such as e.g. a piers or span of a flyover.

This problem may be solved by the introduction of an intelligent safety system that, immediately before the instant of a collision and based on information received from various sensors to confirm the unavoidability of the collision, would adjust the stiffness of the structures of the vehicles involved in a collision for the collision effects on the vehicle occupants to be as little tragic as possible. This is a task difficult to cope with and it requires cooperation of the system with a system of sensors and software so that the road situation could be assessed as much ahead as possible and, based on this, reliable information about the unavoidability of a frontal collision could be obtained. The example embodiment of the present invention does not include the sensors and software that are needed to obtain information about the type and unavoidability of an imminent road traffic collision. It is assumed that one of the solutions already available in the vehicles offered in the market will be used, such as e.g. the systems used by the Autonomous Emergency Braking (AEB) systems.

The intelligent energy absorber is the core mechanical component that makes it possible to design and build an intelligent safety system as described above.

The intelligent energy absorber employs individual energy absorbers made in the form of V-shaped wire with its both free ends having been helically coiled on cylindrical spindles fixed to a base frame and with the apex formed at the wire bend point constituting a hooking loop. A sufficiently high load applied to the hooking loop of the energy absorber causes the wire of which the energy absorber is made to be unwound and straightened. A characteristic feature of such an absorber, in comparison with other solutions used for the dissipation of kinetic energy, is a very steep growth in the absorber resistance force after the absorber is activated and then keeping this force on a constant level for the whole absorber operation time. Additional good points of the energy absorber are its simplicity and compact design, resistance to weather and operation conditions, easy selection of the values of the parameters that determine the value of the resistance force generated by the absorber, and low manufacturing cost.

The primary objective of using the energy absorber described above as the basic energy-absorbing element in the construction of the intelligent energy absorber is to ensure the controllability of the absorber stiffness value.

The intelligent energy absorber, depending on its intended use, includes several to several ten individual energy absorbers. The correct/anticipated stiffness of the intelligent energy absorber is attained by engaging/activating a specific number of individual energy absorbers. The application of the intelligent energy absorber to the motor truck safety system will make it possible to adapt the stiffness of the vehicle structure to the conditions of a specific collision and thus to reduce the decelerations acting on the persons involved in the accident.

The constructions of the devices/structures that are currently available and used in vehicles to absorb kinetic energy do not offer a possibility of dynamic changes in the stiffness of the vehicle structure.

To moderate the process of slowing down the vehicles involved in a collision (chiefly passenger cars), the vehicle body parts that constitute the "crumple zone" are used. The solutions of this kind, however, have definite stiffness characteristics, which cannot be modified on an ad hoc basis. To protect the persons present in the vehicle during a collision, seatbelts, airbags, and energy-absorbing materials are chiefly used. The effectiveness of solutions of this kind, however, directly depends on the effectiveness of the engineering solutions that make it possible to absorb vehicle's kinetic energy and to slow down the vehicle in a controlled way.

Actually, attempts were made in the past to devise kinetic energy absorbers that would make it possible for the damping force value to be dynamically changed with the use of hydraulic systems. However, the constructions of such devices are relatively complicated and, above all, they do not offer adequate timing characteristics and the necessary stability of system operation in time and at variable environmental conditions.

In the intelligent energy absorber according to the invention, kinetic energy is absorbed and dissipated by "straightening", in plastic deformation conditions, of the wire of which individual spring-based energy absorbers are made. During the operation of the individual energy absorbers, the stresses in the energy absorber wire have a value that is almost constant and considerably lower than the wire-breaking stress limit. The construction of the intelligent energy absorber makes it possible to shape the absorber characteristic curve within a wide range, with ensuring as steep a growth in the absorber resistance force as possible and then keeping this force on a constant level for a specific absorber operation time.

The object of the invention has been presented, in the form of an embodiment example, with reference to the accompanying drawings, where:

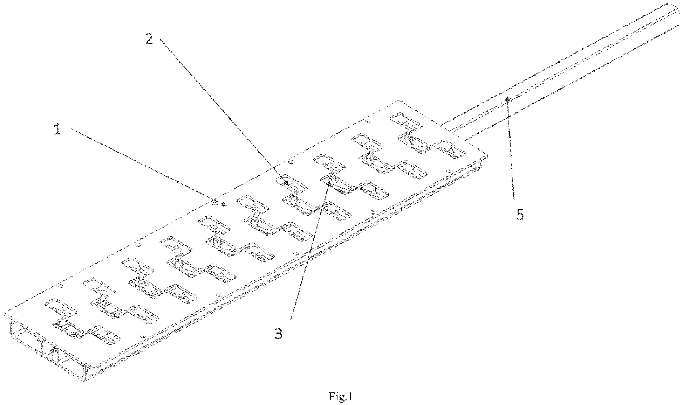

Fig. 1 shows a general view and location of components of the intelligent energy absorber during normal vehicle operation (when the vehicle is driven without the risk of an accident);

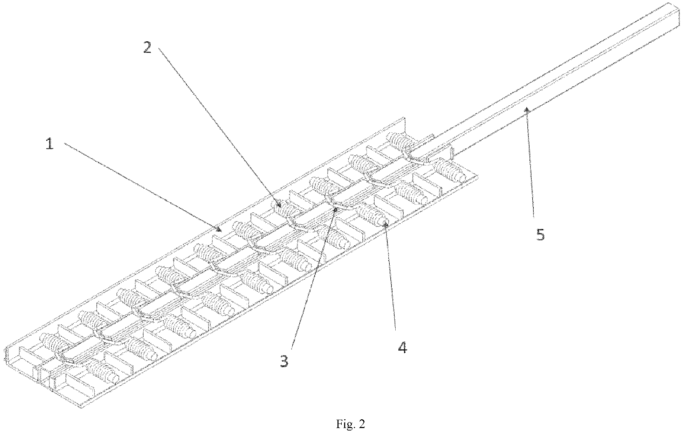

Fig. 2 shows a general view and location of components of the intelligent energy absorber during normal vehicle operation (when the vehicle is driven without the risk of an accident), in the form of a cutaway view (with a fragment of the base frame having been cut away to open the system components to the view);

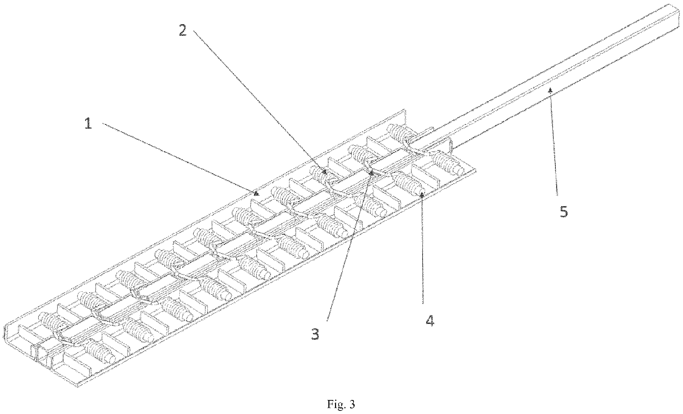

Fig. 3 shows a general view and location of components of the intelligent energy absorber, in the form of a cutaway view, immediately after information was received about the unavoidability and type of an imminent collision with an obstacle and when some individual energy absorbers have been disengaged (their hooking loops have been lifted up from their catches);

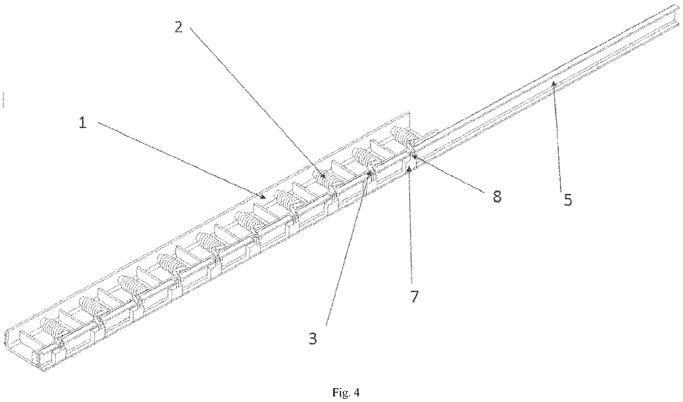

Fig. 4 shows a general view and location of components of the intelligent energy absorber, in the form of a cutaway view (with fragments of the base frame and the guiding rail having been cut away to open the system components to the view), immediately after information was received about the unavoidability and type of an imminent collision with an obstacle and when some individual energy absorbers have been disengaged (their hooking loops have been lifted up from their catches);

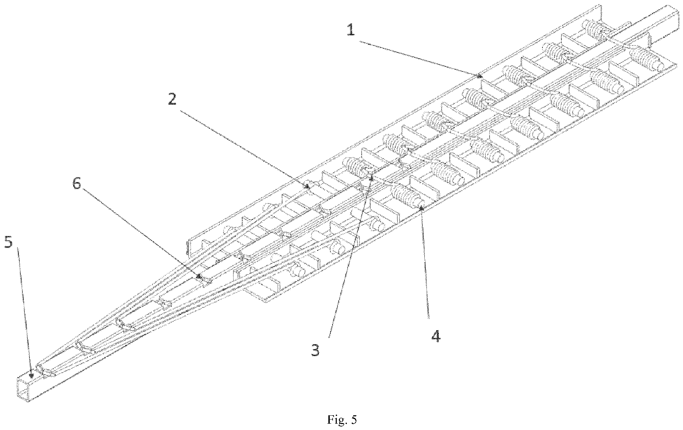

Fig. 5 shows a general view and location of components of the intelligent energy absorber, in the form of a cutaway view (with a fragment of the base frame having been cut away to open the system components to the view), during the absorber operation, i.e. after the instant of the collision and just before the instant of the vehicle coming to a standstill;

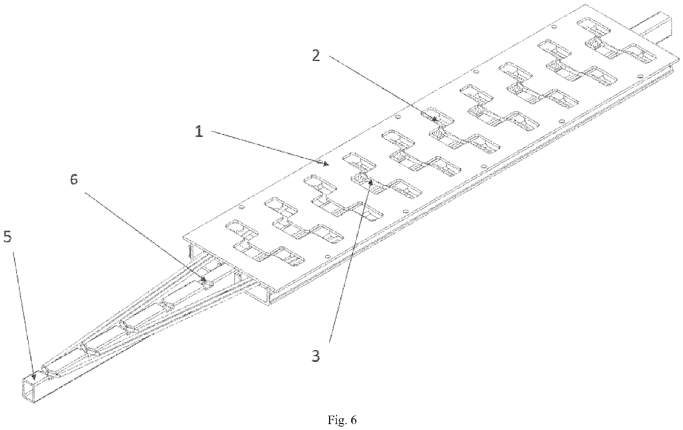

Fig. 6 shows a general view and location of components of the intelligent energy absorber during the absorber operation, i.e. after the instant of the collision and just before the instant of the vehicle coming to a standstill.

The reference numerals used in the drawings have the meaning as follows: 1 - base frame of the intelligent energy absorber; 2 - energy absorber; 3 - hooking loop; 4 - absorber spindle; 5 - guiding rail; 6 - catch; 7 - solenoid; 8 - solenoid actuator ram.

The intelligent energy absorber presented in Figs. 1-6 consists of ten individual energy absorbers 2 fixed in absorber base frame 1 by means of cylindrical spindles 4. Individual energy absorber 2 consists of wire made of a material having appropriate mechanical properties and coiled in the form of a double helical spring with hooking loop 3. Thanks to a small clearance between spindle 4 and energy absorber 4, these two elements may freely rotate in relation to each other. A bend in the wire of which energy absorber 2 is made constitutes absorber hooking loop 3. The ends of the wire of which energy absorber 2 is made remain free. Individual energy absorber 2 is activated when hooking loop 3 is moved away from spindle 4. The resistance force generated by individual energy absorber 2 is a result of unwinding and straightening of the wire of which energy absorber 2 is made. This force is directed perpendicularly to the axis of cylindrical spindle 4. The resistance force is generated by individual energy absorber 2 whenever an attempt is made to increase the distance between spindle 4 and hooking loop 3.

During normal operation of the intelligent energy absorber, all its components remain at rest in relation to each other, with some clearance between individual parts being maintained. At that time, all hooking loops 3 of individual energy absorbers 2 are kept in a position in which they are prepared to engagement with catches 6 of guiding rail 5 when an attempt is made to move the guiding rail and thus to increase the distance between hooking loop 3 and catch 6. At the instant when information about the unavoidability of a frontal collision and the type of the obstacle to be hit is obtained from a vehicle safety system monitoring the vehicle environment, selected solenoids 7 are activated and corresponding solenoid actuator rams 8 are displaced to press selected hooking loops 3 and to release them from the possibility of engagement with catches 6. At the instant of the collision, i.e. when base frame 1 of the intelligent energy absorber is moved in relation to guiding rail 5, some of energy absorbers 2, i.e. those that have not been deactivated by solenoid actuator rams 8 (in Figs. 3 and 4, this applies to the first three absorbers, which have not been lifted up), are activated. Thus, the stiffness of the intelligent energy absorber, i.e. the resistance force generated by the absorber, is adapted to the conditions of the specific frontal collision and to the objects involved.

## Claims

1. An intelligent energy absorber used for reducing the maximum values of the decelerations that act on motor vehicle occupant's body during a frontal collision, **characterized in that** it consists of at least one energy absorber (2), which is made in the form of V-shaped wire with its both free ends having been helically coiled on cylindrical spindles (4) fixed to a base frame (1) and with the apex formed at the wire bend point constituting a hooking loop (3) placed in a catch (6) of a guiding rail (5) and subject to the action of a ram (8) operated by an actuator (7).

2. An intelligent energy absorber according to claim 1, **characterized in that** a solenoid is used as the actuator (7) operating the actuator ram (8).

3. An intelligent energy absorber according to claim 1 or 2, **characterized in that** the top surface of the guiding rail (5) has notches that can be used as catches (6).

4. An intelligent energy absorber according to claim 1, 2, or 3, **characterized in that** it has a mechanism making it possible for hooking loops (3) of selected energy absorbers (2) to be engaged with, and to be disengaged from, their catches (6) of the guiding rail (5), preferably within a time shorter than 1 s.

5. An intelligent energy absorber according to any of the preceding claims from 1 to 4, **characterized in that** it is configured to absorb and dissipate kinetic energy by "straightening", in plastic deformation conditions, of the energy absorber (2) wires made of a material having appropriate mechanical properties, with appropriately selected geometrical parameters, typically such as wire diameter, winding diameter, number of turns.

6. An intelligent energy absorber according to any of the preceding claims from 1 to 5, **characterized in that** the free ends of the wire of which each energy absorber (2) is made remain free, thanks to which the absorber (2) may freely rotate on the cylindrical spindle (round bar or bobbin) (4) placed in it, with a part of the absorber wire forming a hooking loop (3).
